# FASCICULE DE BREVET EUROPEEN

(11) **EP 3 697 681 B1**
(45) Date de publication et mention de la délivrance du brevet: **04.10.2023**
(21) Numéro de dépôt: 18789605.5
(22) Date de dépôt: 17.10.2018
(51) Int. Cl.: B63B 49/00, G08G 3/00, G08G 3/02, G01C 21/20

(54) **SYSTÈME DE GUIDAGE D'UN BATEAU CONNECTÉ DOTÉ D'UN SYSTÈME EMBARQUÉ COMMUNIQUANT AVEC UN SERVEUR DISTANT AFIN DE MODIFIER SON PLAN DE ROUTE**
SYSTEM ZUR FÜHRUNG EINES ANGEHÄNGTEN BOOTES MIT EINEM MIT EINEM FERNSERVER KOMMUNIZIERENDEN BORDSYSTEM ZUR ÄNDERUNG SEINES ROUTENPLANS
SYSTEM FOR GUIDING A CONNECTED BOAT EQUIPPED WITH AN ON-BOARD SYSTEM COMMUNICATING WITH A REMOTE SERVER IN ORDER TO MODIFY ITS ROUTE PLAN

(30) Priorité: 18.10.2017 FR 1759777
(43) Date de publication de la demande: 26.08.2020
(73) Titulaire: Kara Technology, 49124 Saint Barthelemy d'Anjou (FR)
(72) Inventeur: BIGNONET, Ivain, 49124 Saint Barthelemy d'Anjou (FR); MARTIN, Cédric, 49610 Murs-Erigne (FR)
(74) Mandataire: Lequien, Philippe
(86) Numéro de dépôt international: PCT/EP2018/078451
(87) Numéro de publication internationale: WO 2019/077000

(56) Documents cités:
- EP-A1- 3 006 323
- EP-B1- 3 006 323
- WO-A1-2004/019301
- WO-A2-03/029837
- WO-A2-2007/118036
- CN-U- 203 982 456
- JP-A- H06 325 300
- KR-A- 20080 086 216

## Description

### 1. DOMAINE DE L'INVENTION

Le domaine de l'invention est celui d'un navire comportant un système embarqué communiquant de façon bidirectionnelle avec des stations au sol ou avec d'autres bateaux pour transmettre sa position géographique. L'invention concerne plus particulièrement le fait que le plan de route du bateau est modifié suite à une communication afin de répondre à un service spécifique pour ce bateau.

### 2. ARRIÈRE-PLAN TECHNOLOGIQUE

De nos jours, un public de plus en plus important s'adonne au plaisir de la navigation de plaisance. Cette activité procure un grand plaisir et un fort sentiment de liberté lorsque le bateau évolue sur la mer. Mais ce loisir doit rester sécuritaire et les occupants d'un bateau doivent non seulement apprendre à s'en servir, mais aussi connaître le milieu de la mer pour y évoluer en toute sécurité. Pour éviter les accidents, le bateau est équipé d'un certain nombre de dispositifs, et en tout premier lieu un moyen de communication radio. Grâce à la radio, le pilote peut communiquer en vocal avec des stations au sol pour connaître les prévisions météo (dont l'évolution du vent et de la mer), la disponibilité d'un port, la possibilité de se ravitailler en carburant. Le pilote dispose également à bord de cartes et/ou d'un système GPS permettant de se localiser. En connaissant sa position et en définissant son point d'arrivée, le pilote trace un plan de route qui permet notamment d'éviter des obstacles, des écueils par exemple.

La radio permet aussi de lancer des appels de détresse aux navires à proximité pour qu'ils viennent à votre secours. Le pilote du bateau décrit la criticité de sa situation et communique sa position. Les autres navires peuvent alors se dérouter pour porter assistance à ce bateau. La radio permet également à un pilote d'un bateau d'avertir les autres navires de la présence d'un obstacle à un certain endroit, un iceberg par exemple, et éventuellement d'indiquer son déplacement.

Dans d'autres circonstances moins critiques, la radio permet d'anticiper un besoin qui va se faire sentir bientôt et risque de compromettre la poursuite du voyage s'il n'est pas résolu. Par exemple, le bateau dispose d'une réserve d'eau potable qu'il est nécessaire de remplir régulièrement, sous peine d'affecter le confort des passagers. De même, le ravitaillement doit être assuré en prenant en compte le temps de route vers le prochain port. Dans le cas d'un bateau à moteur, le réservoir ne doit pas se devenir vide alors que le bâtiment est en pleine mer. Tous ces besoins peuvent être anticipés par des communications radio afin de vérifier que les produits nécessaires à la poursuite du voyage vont bien se trouver à bord.

Si le bateau est loué, la dernière personne à le prendre doit indiquer au loueur son état et notamment s'il manque des éléments importants (par exemple une brassière de sécurité). En indiquant par radio que certains dispositifs sont manquants ou hors service, le loueur peut rechercher ces éléments de façon à les mettre sur le bateau lorsque ce dernier est rentré au port, et ainsi rendre ce bateau plus vite opérationnel pour un prochaine location.

Les bateaux peuvent aussi être utilisés lors d'une course, dans ce cas ils sont équipés de balises de localisation qui transmettent en permanence des signaux à un serveur au sol qui peut ainsi déterminer en temps réel les positions des concurrents et déterminer qui est en tête.

Le document JP - WO2004/019301 déposé par ISHIKAWA HARIMA divulgue le guidage d'un navire selon un certain plan de route, en utilisant des téléphones portables qui communique en temps réel la position du navire à un serveur au sol. Le serveur transmettre des commandes de navigation à effectuer pour atteindre une certaine position (le quai par exemple). Chaque navire peut aussi communiquer avec le serveur qui connaît leurs positions respectives et signale d'éventuelles collisions.

Le document JP H06 325300 déposé par TOKIMEC divulgue un système pour aider les navires à naviguer dans des conditions atmosphériques difficiles, par exemple par temps de brouillard, et éviter les collisions. Les navires 20 communiquent avec des satellites et un système au sol et reçoivent des informations à afficher sur un écran, dont la trajectoire des bateaux qui sont proches.

Le document KR 2008/0086216 déposé par RF TECKWIN décrit un dispositif de communication entre des systèmes embarqués dans des navires et des serveurs au sol. Le système embarqué identifie le navire auprès d'une autorité portuaire et servir en cas d'urgence, et émet un signal de détresse en cas d'urgence.

Tous ces exemples montrent le rôle important de la radio, mais les communications sont quelquefois fastidieuses pour le pilote qui doit à la fois se concentrer sur la navigation et tenir une conversation.

Tous ces exemples montrent la nécessité d'imaginer un nouveau concept de gestion de la navigation pour un bateau qui communique automatiquement avec des dispositifs à proximité et conseille son pilote sur la marche à suivre, en proposant éventuellement un nouveau plan de route.

### 3. EXPOSÉ DE L'INVENTION

Il est proposé un système de guidage selon les revendications, en particulier, il est proposé un système de guidage d'au moins un bateau comprenant ledit bateau comprenant au moins un équipement ayant un paramètre variant avec le temps et au moins un serveur distant, ledit bateau comportant une unité centrale reliée à une interface utilisateur, et à un moyen radio de communication bidirectionnelle avec le serveur distant, caractérisé en ce qu'il comprend au moins une étiquette électronique apposée sur l'au moins un équipement du bateau qui a un paramètre variant avec le temps, l'étiquette électronique comprenant une puce électronique comportant une mémoire réinscriptible à de nombreuses reprises, et en ce que l'unité centrale est également reliée à un moyen de réception de données émises par l'au moins une étiquette électronique, les données émises par les étiquettes comportant la valeur du paramètre variant avec le temps, ladite unité centrale est configurée pour transmettre par radio au serveur des informations provenant des données émises par les étiquettes, la position actuelle et le plan de route du bateau, et pour recevoir de ce serveur des données de modification du plan de route qui sont affichées sur l'interface utilisateur.

De cette manière, le pilote du bateau peut prendre connaissance du déplacement des navires environnants et éventuellement des risques de collision, et recevoir un nouveau plan de route si nécessaire.

Selon un premier mode de réalisation, le moyen radio de communication bidirectionnelle est conçu pour recevoir la position d'au moins un autre navire qui navigue selon le même plan de route, et est parti au même moment à partir d'un point de départ différent, l'interface utilisateur affichant la position du bateau et de l'au moins un autre navire.

Selon un autre mode de réalisation, le procédé de guidage d'un bateau comporte un moyen pour établir une communication radio avec des étiquettes électroniques (9) apposées sur des objets à bord du bateau, ledit moyen reçoit desdites étiquette un code identifiant l'objet, et l'unité centrale compare les identifiants reçus avec une liste d'identifiants en mémoire afin de répertorier et d'afficher sur un écran les objets présents et absents à bord.

Dans un mode de réalisation particulier de l'invention, il est proposé un procédé de guidage d'au moins un bateau comportant une unité centrale reliée à une interface utilisateur), un moyen de réception de données émises par au moins une étiquette électronique apposée sur un équipement du bateau et à des moyens radio de communication bidirectionnelle avec un serveur distant. Le procédé comporte les étapes suivantes :
- émission par ladite unité centrale vers un serveur distant d'informations provenant des données émises par les étiquettes de données d'état du bateau (1), la position du bateau et du plan de route du bateau,
- émission par ce serveur de données de modification du plan de route qui sont affichées sur l'interface utilisateur (5, 7).

Selon un premier mode de réalisation, le procédé de guidage d'un bateau comporte en outre les étapes suivantes :
- émission par au moins un autre navire vers l'unité centrale de son plan de route et de sa position,
- calcul de la trajectoire de l'au moins un autre navire en fonction du temps, défini par le plan de route transmis,
- comparaison par le serveur distant de la trajectoire du bateau définie par son plan de route et de l'au moins une trajectoire de l'au moins un autre navire,
- détermination des distances séparant les positions du bateau et l'au moins un navire à des intervalles de temps réguliers selon leurs trajectoires respectives et détection d'un risque de collision si cette distance se situe en-dessous d'une certaine valeur à un certain moment.
- affichage d'un risque de collision en indiquant l'endroit où se passera cette collision.

Selon un autre mode de réalisation, ladite unité centrale transmet à un serveur de gestion d'un port son plan de route pour arriver à ce port, et le procédé comporte en outre les étapes suivantes :
- détermination par le serveur du port d'un emplacement disponible permettant l'amarrage dudit bateau dans ce port,
- modification par le serveur du port du plan de route transmis pour atteindre l'emplacement disponible,
- émission par le serveur vers le bateau du plan de route modifié et affichage du plan de route modifié sur un écran du bateau.

Selon un autre mode de réalisation, le procédé de guidage d'un bateau comporte en outre les étapes suivantes :
- réception par le bateau et au moins un autre navire du même plan de route à partir de points de départ différents,
- départ de chaque point de départ du bateau et de l'au moins un autre navire pour naviguer selon la trajectoire définie par le même plan de route,
- émission par l'au moins un autre navire de sa position à destination du bateau,
- réception de la position de l'au moins un autre navire et affichage sur un écran de la position du bateau et de l'autre moins un autre navire

Selon un autre mode de réalisation, le procédé de guidage d'un bateau comporte en outre une étape de calcul des classements du bateau et de l'au moins un autre navire en fonction de leurs positions respectives sur le plan de route, et une étape d'affichage d'une indication sur le classement du bateau et de l'au moins un autre navire.

Selon un autre mode de réalisation, le procédé de guidage d'un bateau comporte en outre une étape d'introduction d'une commande pour signaler la présence d'un objet flottant à proximité du bateau, ladite étape d'introduction déclenchant une étape d'émission par radio d'un message associant la présence d'un objet flottant à la position du bateau au moment de l'introduction de la commande.

Selon un autre mode de réalisation, le procédé de guidage d'un bateau comporte en outre une étape d'établissement d'une communication radio avec des étiquettes électroniques apposées sur des objets à bord du bateau, lesdites étiquette émettant un code identifiant l'objet, et une étape de comparaison des identifiants reçus avec une liste d'identifiants afin de répertorier et d'afficher sur un écran les objets présents et absents à bord.

Selon un autre mode de réalisation, l'étiquette électronique est apposée sur un réservoir d'eau et transmet une information représentative du niveau d'eau à l'intérieur, le procédé comportant une étape de comparaison du niveau d'eau actuel avec un niveau d'eau minimal, ladite étape déclenchant si le niveau est en-dessous du niveau minimal une étape de détermination d'un nouveau plan de route permettant au bateau d'arriver à une réserve d'eau et une étape d'affichage de ce nouveau plan de route.

Selon un autre mode de réalisation, l'étiquette électronique est apposée sur un réservoir de carburant et transmet une information représentative du niveau de carburant à l'intérieur, le procédé comportant une étape de comparaison du niveau de carburant actuel avec un niveau de carburant minimal, ladite étape déclenchant si le niveau est en-dessous du niveau minimal une étape de détermination d'un nouveau plan de route permettant au bateau d'arriver à une réserve de carburant et une étape d'affichage de ce nouveau plan de route.

Selon un autre mode de réalisation, l'étiquette électronique est apposée sur un équipement dont la défaillance est détectable par ladite étiquette, le procédé comportant une étape de détection de la défaillance dudit équipement déclenchant les étapes suivantes :
- émission par l'unité centrale vers un serveur au sol de la position du bateau, du plan de route et de la référence de l'équipement défaillant,
- recherche par le serveur d'un port où un équipement en ordre de marche est disponible, le port étant sélectionné selon sa proximité avec le point d'arrivée du bateau,
- émission par le serveur vers le bateau d'un nouveau plan de route permettant au bateau d'arriver au port sélectionné,
- affichage sur un écran du nouveau plan de route.

Selon un autre mode de réalisation, le procédé de guidage d'un bateau comporte une étape d'introduction d'une commande pour réserver l'équipement présent au port déclenchant une étape d'émission vers le serveur d'un signal de réservation dudit équipement.

Selon un autre mode de réalisation, le bateau comporte un détecteur de choc destiné à détecter des chocs contre la coque, ledit procédé comportant l'émission vers un serveur au sol d'un signal lorsqu'un choc est détecté et l'affichage sur un écran du serveur de la présence dudit choc.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un exemple de schéma d'un bateau connecté utilisable dans le cadre de la présente invention,
- la figure 2 montre un exemple des étapes permettant au système embarqué de prévenir les collisions avec d'autres bateaux,
- la figure 3 représente un exemple de page d'écran affiché sur un écran du bateau pour montrer les risques de collision,
- la figure 4 représente un exemple de page d'écran dans le contexte d'une course virtuelle entre plusieurs navires,
- la figure 5 représente un exemple de menu affiché sur un écran du bateau listant les équipements présents à bord et donnant des indications sur leurs états,
- la figure 6 montre un exemple des étapes permettant de détecter une défaillance sur un équipement à bord et de changer cet équipement,
- la figure 7 représente un exemple de menu affiché sur un écran de terminal d'un serveur au sol listant les équipements présents à bord et donnant une indication sur des chocs subis à la coque.

### 5. DESCRIPTION DÉTAILLÉE

Sur toutes les figures du présent document, les éléments identiques sont désignés par une même référence numérique.

### 5.1 Description générale de l'invention

Il est proposé un système de guidage d'au moins un bateau (1) comprenant: ledit bateau comprenant au moins un équipement ayant un paramètre variant avec le temps; et au moins un serveur distant (12); ledit bateau (1) comportant une unité centrale (3) reliée à une interface utilisateur (5, 6) et à un moyen radio de communication bidirectionnelle avec le serveur distant, caractérisé en ce qu'il comprend au moins une étiquette électronique apposée sur l'au moins un équipement du bateau qui a un paramètre variant avec le temps, l'étiquette électronique comprenant une puce électronique comportant une mémoire réinscriptible à de nombreuses reprises, et en ce que l'unité centrale est également reliée à un moyen de réception de données émises par l'au moins une étiquette électronique, les données émises par les étiquettes comportant la valeur du paramètre variant avec le temps, ladite unité centrale transmettant par radio au serveur (12) des informations provenant des données émises par les étiquettes, la position actuelle et le plan de route du bateau (1), et reçoit de ce serveur des données de modification du plan de route qui sont affichées sur l'interface utilisateur.

### 5.2 Description matérielle d'un bateau connecté

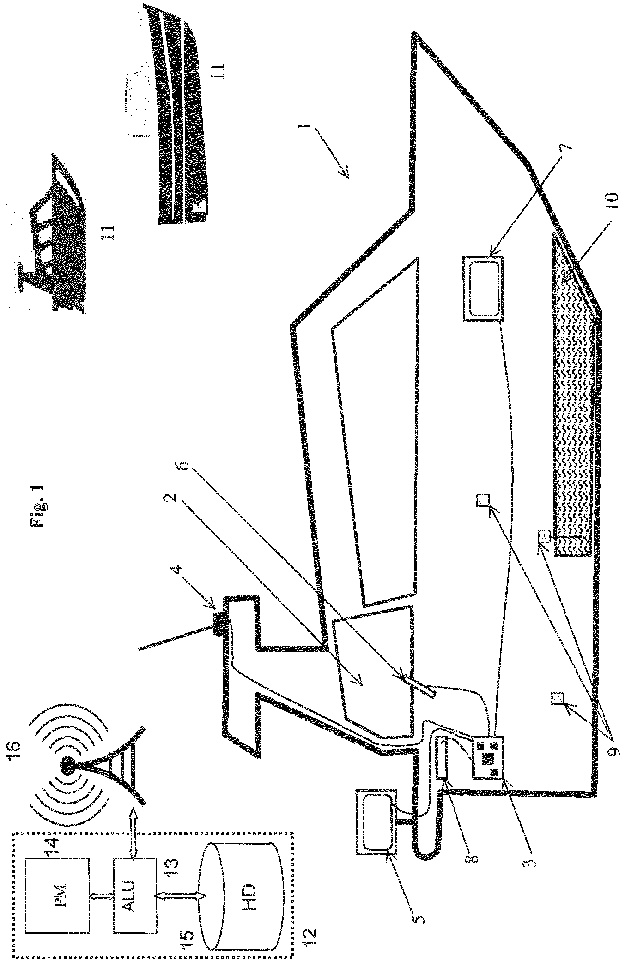

La **Fig. 1** présente un exemple de schéma d'un bateau connecté utilisable dans le cadre de la présente invention et communiquant avec d'autres navires et des stations radio au sol. Le bateau 1 est par exemple un navire de plaisance à moteur, ce qui n'exclut en rien le fait de fonctionner avec des voiles, ou à l'énergie solaire. Le bateau dispose d'un emplacement 2 pour son pilote (cette personne est généralement appelée « skipper » en langue Anglo-saxonne). Cet emplacement se situe généralement vers l'avant et en hauteur pour un bateau à moteur, ou plutôt à l'arrière pour un voilier. Le bateau 1 est dit « connecté » en ce qu'il comporte un système informatique embarqué comprenant un boîtier de commande 3 comportant de façon connue en soi : une unité centrale, une mémoire et des ports d'entrée et de sortie. Le boîtier est alimenté en permanence par une batterie qui est généralement rechargée par des panneaux solaires. Le boîtier de commande 3 possède des moyens logiciels pour télécharger des applications et enrichir ainsi ses capacités de traitement. Le boîtier de commande dispose notamment d'un moyen permettant de déterminer sa position géographique, un système GPS (« *Global Positioning System »* selon la langue anglo-saxonne) par exemple. Le boîtier de commande est relié à divers dispositifs embarqués qui vont être détaillés, l'ensemble constituant le système embarqué.

Le système embarqué comporte un moyen de communication 4 radio permettant de communiquer avec des centres d'intervention au sol et des navires se trouvant dans le voisinage. Ce moyen est généralement un appareil radio VHF (de « Very High Fréquence » en langue Anglo-saxonne), ou un module de communication radio longue distance, ou encore un module de téléphonie cellulaire (le GSM par exemple) utilisable près des côtes. Ce moyen peut être le même que celui permettant de dialoguer en phonie avec un interlocuteur distant.

Le système embarqué comporte également au moins une interface utilisateur présente de préférence sous la forme d'une table tactile 5 placée à l'arrière de l'emplacement 2 où se trouve le pilote du bateau. Avantageusement, la table est inclinable selon un angle d'au moins 100° et est placée en haut d'un pied solidement fixé au bateau. Selon une variante, l'interface utilisateur est constituée d'un écran et d'un clavier séparé 6 placé à proximité immédiate du gouvernail, ou encore d'un écran associé à un moyen de reconnaissance vocale. D'autres écrans 7 peuvent se trouver dans des cabines à l'intérieur du bateau, ces écrans permettent aux passagers de suite de l'intérieur la navigation du bateau 1.

Selon un mode particulier de réalisation, le système embarqué comporte un moyen 8 de détection et de communication avec des étiquettes radio 9 se trouvant dans le bateau. Ce moyen est par exemple un détecteur de puces RF_ID qui utilise les ondes radio à courte portée dit NFC (« Near Field Communication » en Anglais ou « communication à courte portée » en Français) en émettant un champ électromagnétique à haute fréquence. Ce champ électrique est capté par une bobine imprimée sur l'étiquette et une tension est générée à ses bornes pour alimenter en énergie une puce électronique de type RF_ID par exemple. Dans sa version de base la puce électronique comporte une mémoire contenant un code informatique. La puce ainsi alimentée lit le code dans sa mémoire et l'émet en réponse à l'apparition du champ électromagnétique. Les données du code sont émises en série en générant une onde retour qui se superpose au champ électromagnétique et qui peut être capté par l'antenne du moyen de détection 8. Ce code est très généralement spécifique à l'équipement sur lequel une étiquette radio est apposée, de sorte que le code réalise au moins la fonction d'identification de cet équipement.

Le boîtier de commande 3 déclenche l'activation du champ électromagnétique émis par le moyen 8 de détection, et la mise à l'écoute des signaux émis par toutes les étiquettes présentes dans un rayon de quelques mètres à l'intérieur du bateau 1. Le boîtier de commande 3 reçoit ainsi les codes d'identification des équipements présents dans le bateau 1 et associés aux étiquettes ainsi activées. De cette manière, le système embarqué peut détecter à bord leur présence ou leur absence. Certains équipements sont associés à des valeurs qui caractérisent leurs états actuels de fonctionnement, on peut citer par exemple un réservoir d'eau potable 10 possédant une jauge de niveau et un capteur associé qui communique avec le boîtier de commande par radio ou par une liaison filaire. La valeur représentative du niveau d'eau est transmise au boîtier de commande 3 qui peut ainsi déterminer la présence d'un ou plusieurs réservoirs d'eau 10 à bord et la quantité d'eau qu'ils contiennent.

Le boîtier de commande 3 échange des données à travers son moyen de communication 4 radio avec d'autres navires 11 se trouvant dans le voisinage et/ou avec des centres d'intervention au sol 12, de préférence situés sur la côte. Ces centres d'intervention 12 comportent des serveurs disposant classiquement d'une unité centrale 13, d'une mémoire de programme 14 et d'une mémoire de données 15, ils sont connectés à une ou plusieurs antennes fixes 16 pour la communication radio. Les données échangées sont typiquement une information émises par au moins une étiquette apposée sur un équipement embarqué, la position du navire et le palan de route tel que défini par exemple par le pilote. Ces données sont régulièrement émises par le système embarqué sans intervention du pilote.

Après avoir présenté les différents éléments du système informatique embarqué, nous allons maintenant détailler comment ceux-ci coopèrent et montrer le fonctionnement dudit système. La coopération entre ces éléments s'effectue selon plusieurs scénarios qui vont maintenant être décrits.

### 5.2 Prévention des collisions

Selon un premier scénario, le bateau 1 transmet par radio son plan de route autour de lui et reçoit les plans de route des autres bâtiments naviguant à proximité de lui. Un plan de route est une succession de points géographiques qui sont introduits par le pilote et qui définissent une succession de lignes droites formant la trajectoire du navire à partir de sa position actuelle. Un plan de route est donc une succession de points formant une ligne brisée en partant d'un point géographique donné. Une trajectoire est un ensemble de couples formés par des points géographiques déterminés par un plan de route et des moments où le navire atteint chaque point compte tenu de sa vitesse actuelle. Le système embarqué affiche sur un écran la position actuelle du bateau 1 et sa propre trajectoire ainsi que celles des autres bâtiments, et une alarme retentit et/ou s'affiche de façon à prévenir d'une possible collision.

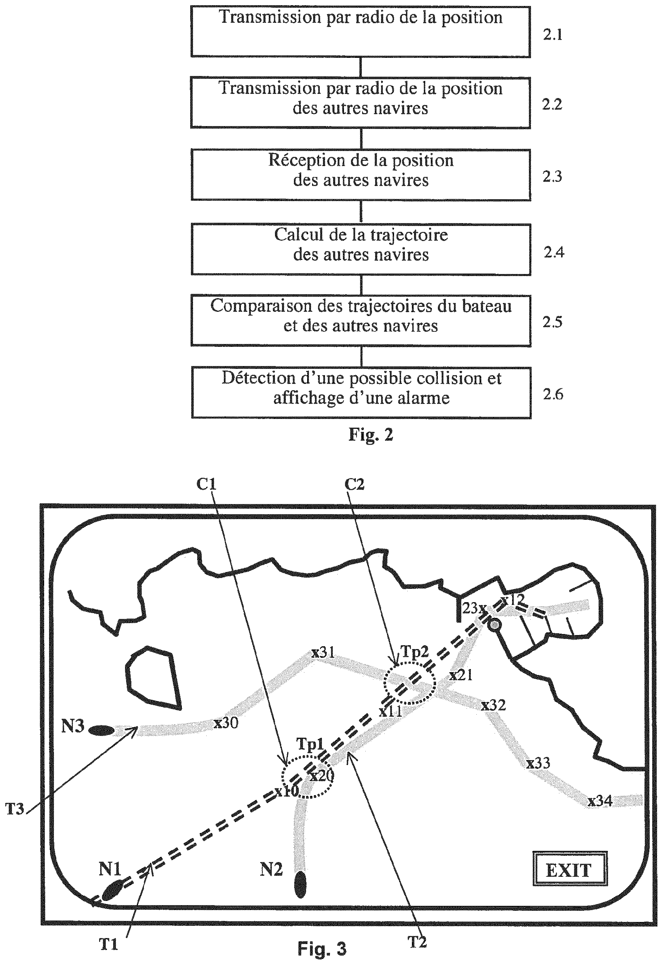

Les principales étapes de ce scénario sont décrites par l'ordinogramme de la **Fig. 2**, cet ordinogramme représentant les principales étapes d'un programme exécutable par le boîtier 3 du bateau 1. Dans un premier temps, à l'étape 2.1, le bateau 1 utilise son moyen de communication radio 4 pour émettre un message indiquant sa position, son plan de route et la vitesse prévue pour parcourir ce plan de route. Le message est reçu par une pluralisé de navires (étape 2.2) et chacun détermine la trajectoire du bateau 1 en fonction du temps. A l'étape 2.3, chaque navire transmet au bateau 1 un message comportant sa propre position, son propre plan de route et sa vitesse prévue. Le bateau 1 reçoit ce dernier message, calcule les trajectoires des autres navires en fonction du temps et affiche sur un écran sa propre trajectoire ainsi que celles des autres bateaux. Un exemple de page d'écran affiché sur l'écran 5 est présenté à la **Fig. 3** où l'on voit que le bateau 1 parcourt une trajectoire T1, un navire N2 parcourt une trajectoire T2, et un navire N3 parcourt une trajectoire T3 (étape 2.4). Pour chaque navire Nj, les trajectoires sont modélisées par un ensemble de coordonnées Nj(xi,yi) géographiques associées à une succession d'instants donnés Tpi, chaque coordonnée étant séparée d'une certaine durée, 10 secondes par exemple.

A l'étape 2.5, le boîtier 3 du bateau compare les coordonnées N1(xi,yi) de sa propre trajectoire T1 avec les coordonnées N2(xi,yi) des autres trajectoires au même instant, et calcule les distances entre le bateau 1 et les autres navires au même instant. Si à un certain moment un bâtiment va se trouver à moins d'une certaine distance du bateau 1 (typiquement 50 mètres), alors le boîtier 3 détecte un risque de collision. Dans ce cas, le risque de collision est affiché sur l'écran sous la forme d'une icône d'alarme montrant l'endroit de la possible collision. (étape 2.6). Une indication peut également être affichée pour indiquer à quel moment cette collision peut intervenir. Cette alarme avertit alors le pilote qui a fort intérêt de modifier son plan de route. Sur l'exemple de menu de la **Fig. 3**, deux risques de collision ont été déterminés par le boîtier 3, l'une avec le navire N2 au moment Tp1, et l'autre avec le navire N3 au moment Tp2. Avantageusement, l'endroit où se situe le risque de collision est mis en évidence graphique (il est matérialisé par un cercle en pointillé sur la **Fig. 3**), par un clignotement, ou une surbrillance, et éventuellement signalé par un signal sonore.

Selon un perfectionnement, le système embarqué transmet régulièrement aux autres navires et/ou à un serveur distant 12 sa position, son plan de route et la vitesse prévue pour parcourir ce plan de route. Recevant ensuite les autres messages des navires à proximité, le système embarqué met à jour la présentation des trajectoires telle que cela est illustré à la **Fig. 3****.** Le pilote peut ainsi voir l'évolution des trajectoires, et les risques de collision. Ce perfectionnement est particulièrement adapté aux bateaux à voiles dont les vitesses de déplacement peuvent fluctuer considérablement.

Selon un autre perfectionnement, le navire est en mouvement vers un port et le plan de route est transmis à un centre d'intervention 9 au sol qui gère les emplacements disponibles. Le serveur au sol détermine un emplacement libre pour ce bateau et au cours de la navigation, lui transmet un nouveau plan de route dont le point d'arrivée est la position précise de cet emplacement. Le bateau affiche sur un écran la position de cet emplacement et un message du type :
« le serveur du port propose de venir accoster à cet endroit »
« Voulez-vous modifier le plan de route pour y aller ? »

Si à cette question le pilote répond par l'affirmative, le système embarqué modifie le plan de route pour que les dernières positions permettent au bateau d'atteindre cet emplacement.

### 5.4 Description d'un bateau connecté à d'autres bateaux

Selon un second scénario, le bateau 1 participe à une course virtuelle avec d'autres bateaux, qui doivent réaliser le même plan de route, en partant au même moment mais pas au même endroit. Pour permettre de repérer le parcours, des bouées sont installées au niveau des points Des parcours sont balisés par des bouées sur l'étendue d'eau et des bouées de départ et d'arrivée sont définies. Les bateaux communiquent entre eux pour échanger leurs positions relatives par rapport à leurs points de départ et, en comparant avec sa propre position, le système embarqué détermine son classement au sein de cette course.

Pour réaliser cette course virtuelle, les bateaux communiquent entre eux soit directement, soit en passant par des serveurs et des réseaux informatiques. De cette façon, de très grandes distances peuvent séparer les bateaux, évitant ainsi tout risque de collision. Avant le départ, chaque navire a reçu le même plan de route, éventuellement matérialisé par des bouées, et démarre sa course à partir d'un point de départ différent. Au même moment, tous les navires reçoivent le signal du départ. Au cours de la navigation, chaque bateau transmet sa position par rapport au plan de route commun, par exemple un navire peut transmettre le fait qu'il a dépassé le troisième point géographique de 250 mètres et qu'il se situe à 330 mètres du point géographique du quatrième point géographique. Si le bateau 1, recevant ce message détermine qu'il se situe à 100 mètres de troisième point géographique et à 480 mètres du quatrième point géographique, alors il est derrière.

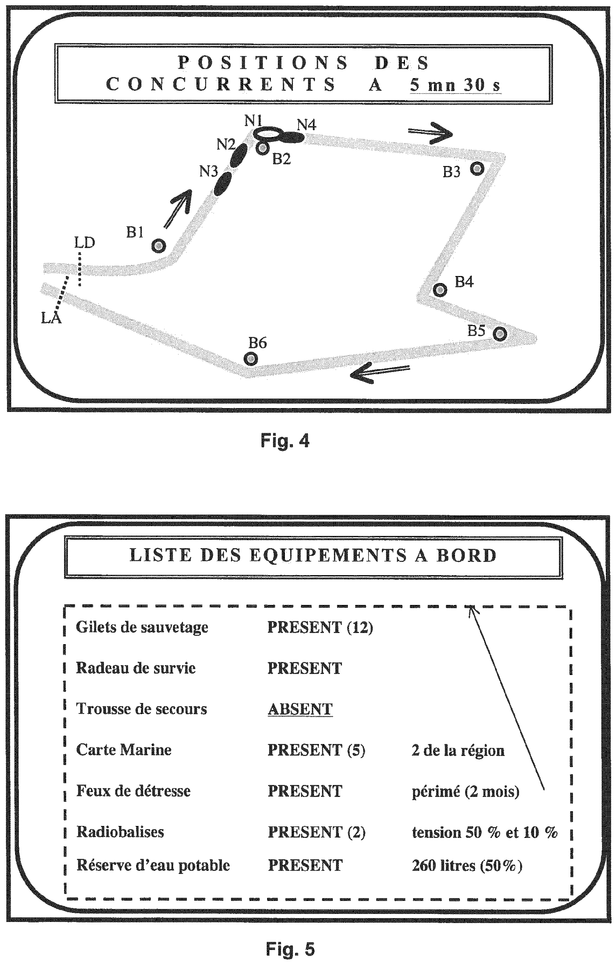

Un exemple de page d'écran dans le contexte d'une course virtuelle est présenté à la **Fig. 4****.** On peut voir quatre bateaux naviguant sur le même plan de route, avec leurs positions respectives à un instant donné qui est affiché. Le trajet comporte 6 bouées, une ligne de départ LD et une ligne d'arrivée LA. On voit clairement que le navire N4 est en tête et suivi de très près par le bateau N1, puis vient le navire N2 et enfin le navire N3 en quatrième position. Le fait que les navires N4 et N1 soient très proches à l'écran n'affecte en rien leurs sécurités puisqu'ils sont physiquement situés très loin l'un de l'autre.

### 5.5 Signalisation d'un objet flottant

Selon un troisième scénario, au cours de la navigation, le pilote du bateau 1 détecte un objet à proximité, cet objet doit être signalé car il peut gêner la navigation d'autres navires, c'est typiquement le cas d'un iceberg ou de toute masse flottante dont la trajectoire n'est pas contrôlée. Le pilote du bateau élabore un message signalant cet objet, et le système embarqué associe cette information avec la position géographique de la position actuelle du bateau et transmet le message par radio. Avantageusement, le message comporte aussi une indication sur la nature de l'objet (iceberg, souche de bois, container métallique, ...) et éventuellement ses dimensions et la direction probable de son déplacement déterminée par le courant marin à cet endroit.

### 5.6 Description d'un bateau communiquant avec des objets connectés

Selon un quatrième scénario, le bateau 1 dispose d'un moyen 8 de détection et de communication avec des étiquettes radio 9 se trouvant à bord Ces étiquettes sont des étiquettes électroniques et sont apposée sur au moins un équipement du bateau qui a un paramètre variant avec le temps, l'étiquette électronique comprenant une puce électronique comportant une mémoire réinscriptible à de nombreuses reprises, les données émises par les étiquettes comportant la valeur du paramètre variant avec le temps. Optionellement, le système embarqué peut contrôler la présence ou l'absence d'objets connectés sur lesquels les étiquettes sont apposées. Ces objets sont par exemple :
- un certain nombre de gilets de sauvetage, des harnais
- un radeau de survie, une trousse de secours,
- une réserve d'eau potable,
- un jeu complet de cartes marines,
- le livre de bord,
- des radiobalises de localisation des sinistres,
- etc.

Tous ces équipements possèdent des étiquettes RF_ID permettant de détecter, leurs présences. Selon l'invention, il existe trois types d'étiquettes en fonction du type d'information écrite dans la mémoire de la puce. Le premier type possède un code inscrit définitivement par le fabriquant de la puce, ce code identifiant un équipement. Ce premier type d'étiquette est apposé sur des équipements qui ne nécessitent pas de maintenance, comme c'est le cas par exemple pour les gilets de sauvetage, les harnais (cas d'un voilier), le radeau de survie. Le second type d'étiquettes RF_ID possède un code qui peut être inscrit après son apposition sur un équipement. Ce second type de puce est fixé sur des équipements dont l'état d'utilisation dépend d'un paramètre dont la valeur est inconnue lors de la fabrication de la puce et qui est inscrite lorsque la puce est apposée sur l'équipement. Cette valeur est par exemple une date de péremption, ou la région décrite par une carte marine. C'est le cas par exemple pour des feux de détresse, ou de la nourriture. Le troisième type de puce comporte une mémoire réinscriptible à de nombreuses reprises, typiquement une EEPROM (de l'Anglais « Electrically Erasable Programmable Read Only Memory). Outre le fait que la valeur inscrite dans la puce identifie l'équipement, cette valeur est caractéristique de son état opérationnel ou d'un paramètre variable lié à l'utilisation de l'équipement. Cette valeur est par exemple le niveau d'eau dans le réservoir d'eau potable, ou la tension de la pile dans la radiobalise de localisation des sinistres.

En recevant les données émises par les différentes étiquettes, le système embarqué réalise un contrôle selon leurs types. Dans le cas du premier type, le système embarqué contrôle uniquement la présence de l'objet et peut ainsi afficher sur l'écran par exemple le nombre de brassières de sécurité, la présence du radeau de survie, et de la trousse de secours. Concernant les équipements ayant une étiquette du second type, le système embarqué contrôle leurs présences mais s'ils sont utilisables. Par exemple, des feux de détresse ont une durée de validité de quelques années tout au plus et la date de péremption est inscrite dans la mémoire de la puce. Un autre exemple concerne les cartes marines, le code inscrit dans la puce identifie notamment la région décrite par la carte et le système embarqué contrôle qu'il existe parmi les cartes présentes à bord au moins une relative à la position où se trouve le bateau. Si à l'issue du contrôle, le système embarqué décèle une anomalie, alors il la signale dans un menu.

Les équipements ayant des étiquettes du troisième type ont au moins un paramètre variant avec le temps. Lorsque le système embarqué active le moyen 8 de détection, les étiquettes du troisième type sont activées, mesurent la valeur du paramètre et l'émettent dans le message. Le système embarqué contrôle alors leurs présences ainsi que la valeur du paramètre, et affiche ces informations dans un menu.

La **Fig.5** représente un exemple de menu affiché sur l'écran 5 listant les équipements présents à bord et donnant pour certains d'entre eux des informations sur leurs états. On peut ainsi constater que les feux de détresse sont bien présents à bord mais sont périmés, que le niveau d'eau dans le réservoir est à la moitie de la capacité et qu'il est nécessaire de changer la pile d'une des radiobalises.

Selon un perfectionnement, lorsqu'un équipement manque à bord et que son absence ou son état est critique, alors le système embarqué lance un message vers un serveur au sol 12. Ce message comporte la position actuelle, le plan de route et la référence de l'équipement manquant ou non opérationnel. Le serveur au sol 12 reçoit la référence de l'équipement et lance une commande en vue de trouver des ports où cet équipement est disponible. Au bout d'un certain temps de recherche, le serveur au sol analyse les réponses et choisit celle pour laquelle l'équipement disponible se trouve le plus proche du point d'arrivée du bateau 1. Le serveur au sol modifie si besoin le plan de route pour dérouter le bateau vers le port où l'équipement est disponible. Le nouveau plan de route est affiché au pilote qui peut ainsi décider s'il veut se dérouter ou pas.

Selon un autre perfectionnement, l'élément qui risque de manquer est le carburant. Le système embarqué détecte que le niveau de carburant est en-dessous d'un certain seuil, le serveur au sol 12 transmettant en plan de route vers un port doté d'une pompe à carburant où le navire bateau peut s'approvisionner.

Selon un autre perfectionnement, l'élément qui risque de manquer est l'eau potable. Le système embarqué détecte que le niveau d'eau potable dans les réservoirs est en-dessous d'un certain seuil, le serveur au sol 12 vérifie si le plan de route dirige le bateau vers un port où l'eau potable est disponible, et si ce n'est pas le cas, le serveur transmet alors un nouveau plan de route pour un port doté d'une citerne d'eau potable ou de robinet.

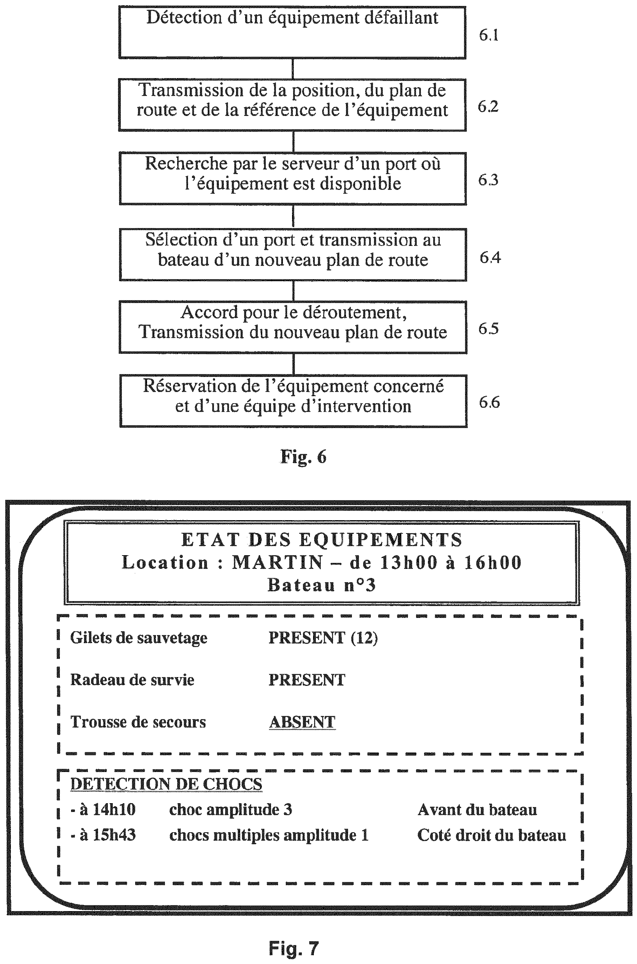

Selon un autre perfectionnement, l'élément est un composant mécanique important du bateau comme une pompe, un moteur ou une batterie, cet élément est doté d'une étiquette capable de transmettre une information sur son état opérationnel. Dans ce cas, le système embarqué et le serveur au sol 12 mettent en place un scénario pour proposer au pilote une intervention. Les principales étapes de ce scénario sont décrites par l'ordinogramme de la **Fig. 6**, cet ordinogramme représentant les principales étapes d'un programme exécutable par le boîtier 3 du bateau 1.

A l'étape 6.1, le système embarqué détecte une défaillance sur un équipement à bord. Le boîtier de commande 3 élabore un message contenant la position du bateau, le plan de route et la référence de l'équipement défaillant et le transmet par radio (étape 6.2). Le serveur au sol 12 qui reçoit le message effectue une recherche et sélectionne un port en fonction du point d'arrivée du bateau 1 défini par le plan de route (étape 6.3), une pièce de rechange étant disponible à ce port. A l'étape 6.4, le serveur au sol transmet au bateau ces informations dans un message dont le contenu est affiché. Le pilote du navire peut alors décider ou non de dérouter le bateau vers ce port et suivre le nouveau plan de route proposé par son système embarqué (étape 6.5). Avantageusement, à l'étape 6.6, le système embarqué transmet un message indiquant le nouveau plan de route et signalant de réserver cette pièce de rechange. Le serveur au sol 12 réserve alors cette pièce et éventuellement les services d'une équipe d'intervention pour la changer.

### 5.6 Description d'un bateau connecté

Selon un cinquième scénario, le bateau est destiné à la location et possède un moyen 8 de détection et de communication avec des étiquettes radio 9 se trouvant à bord. De cette façon, le système embarqué peut contrôler la présence ou l'absence d'objets connectés sur lesquels les étiquettes sont apposées. Ces objets sont ceux par exemple listés au chapitre 5.5.

Au cours de la location, le système embarqué détecte à divers moments la présence des étiquettes à bord et des objets sur lesquels elles sont apposées. Lors d'intervalles de temps réguliers, tous les quarts d'heure par exemple, le bateau émet un message décrivant la liste des équipements à bord avec éventuellement une information sur leurs états opérationnels. En fin de la location, le loueur est ainsi informé que le bateau dispose de l'ensemble de ses équipements ou s'il manque des équipements. S'il manque des équipements, le loueur peut anticiper le retour du bateau et amener sur le quai les équipements manquants. De cette façon, le bateau est plus rapidement rendu opérationnel pour la location suivante.

Selon un perfectionnement, le bateau dispose d'au moins un détecteur de choc capable de détecter si la bateau a heurté un solide, un récif par exemple. Ledit détecteur de choc est connecté au boîtier de commande 3 et transmet immédiatement ses informations lors d'un choc. Le boîtier de commande 3 émet alors un message contenant la position du bateau, le plan de route et des informations décrivant la nature du choc (amplitude, répétabilité, localisation sur la coque, ...). En fin de location, le loueur est averti que le bateau 1 a subi un choc, et sera incité à effectuer une inspection complète de la coque. Selon cette inspection, le loueur va décider si le bateau peut être reloué ou non.

La **Fig.7** représente un exemple de menu affiché sur un terminal du serveur au sol et listant les équipements présents à bord du bateau, ainsi que la présence de chocs éventuels contre la coque. Dans une fenêtre, le système embarqué a détecté la présence de deux chocs lors de la location. Pour chacun de ces chocs, l'écran affiche l'heure et l'amplitude mesurée par le détecteur de choc, ainsi que la localisation qui peut s'effectuer à l'aide de plusieurs capteurs deux à l'avant de chaque coté de la coque, et deux à l'arrière également de chaque coté.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Système de guidage d'au moins un bateau (1) comprenant :
- ledit bateau comprenant au moins un équipement ayant un paramètre variant avec le temps ;
- au moins un serveur distant (12),
ledit bateau (1) comportant une unité centrale (3) reliée à une interface utilisateur (5, 6), et à un moyen radio de communication bidirectionnelle avec le serveur distant, **caractérisé en ce qu'**il comprend au moins une étiquette électronique apposée sur l'au moins un équipement du bateau qui a un paramètre variant avec le temps, l'étiquette électronique comprenant une puce électronique comportant une mémoire réinscriptible à de nombreuses reprises,
et **en ce que** l'unité centrale est également reliée à un moyen de réception de données émises par l'au moins une étiquette électronique, les données émises par les étiquettes comportant la valeur du paramètre variant avec le temps, ladite unité centrale est configurée pour transmettre par radio au serveur (12) des informations provenant des données émises par les étiquettes, la position actuelle et le plan de route du bateau (1), et pour recevoir de ce serveur des données de modification du plan de route qui sont affichées sur l'interface utilisateur.

2. Système de guidage d'un bateau comprenant un bateau (1) et un serveur distant (12) selon la revendication 1 , **caractérisé en ce que** le moyen radio de communication bidirectionnelle est conçu pour recevoir la position d'au moins un autre navire (11) qui navigue selon le même plan de route, et est parti au même moment à partir d'un point de départ différent, l'interface utilisateur (5, 7) affichant la position du bateau et de l'au moins un autre navire.

3. Système de guidage d'un bateau comprenant un bateau (1) et un serveur distant (12), selon la revendication 1 ou 2, **caractérisé en ce que** ledit moyen (8) de réception recevant de l'au moins une étiquette un code identifiant l'objet, l'unité centrale (3) comparant les identifiants reçus avec une liste d'identifiants en mémoire afin de répertorier et d'afficher sur un l'interface utilisateur (5,7) les objets présents et absents à bord.

4. Procédé de guidage d'au moins un bateau (1) comportant :
- au moins un équipement ayant un paramètre variant avec le temps ;
- une unité centrale (3) reliée à une interface utilisateur (5, 6, 7) ;
- des moyens radio de communication bidirectionnelle avec un serveur distant ;,
**caractérisé en ce qu'**au moins une étiquette électronique est apposée sur l'au moins un équipement du bateau qui a un paramètre variant avec le temps, l'étiquette électronique comprenant une puce électronique comportant une mémoire réinscriptible à de nombreuses reprises, l'unité centrale (3) étant reliée à un moyen de réception de données émises par l'au moins une étiquette électronique, les données émises par les étiquettes comportant la valeur du paramètre variant avec le temps,
et **en ce qu'**il comporte les étapes suivantes :
- émission par ladite unité centrale (3) vers un serveur distant d'informations provenant des données émises par les étiquettes de données d'état du bateau (1), la position du bateau et du plan de route du bateau,
- émission par ce serveur de données de modification du plan de route qui sont affichées sur l'interface utilisateur (5, 7).

5. Procédé de guidage d'un bateau selon la revendication 4, **caractérisé en ce qu'**il comporte en outre les étapes suivantes :
- calcul par le serveur distant (2.4) de la trajectoire de l'au moins un autre navire en fonction du temps, défini par le plan de route transmis,
- comparaison (2.5) par le serveur distant (12) de la trajectoire du bateau (1) définie par son plan de route et de l'au moins une trajectoire de l'au moins un autre navire,
- détermination (2.6) des distances séparant les positions du bateau et l'au moins un navire à des intervalles de temps réguliers selon leurs trajectoires respectives et détection d'un risque de collision si cette distance se situe en- dessous d'une certaine valeur à un certain moment,
- transmission par le serveur distant et affichage sur l'interface utilisateur (5, 6, 7) d'un risque de collision en indiquant l'endroit où se passera cette collision.

6. Procédé de guidage d'un bateau selon la revendication 4 à 5, **caractérisé en ce qu'**il comporte en outre les étapes suivantes :
- détermination par le serveur du port d'un emplacement disponible permettant l'amarrage dudit bateau (1) dans ce port,
- modification par le serveur (12) du port du plan de route transmis pour atteindre l'emplacement disponible,
- émission par le serveur (12) vers l'unité centrale (3) du plan de route modifié pour être affiché sur l'interface utilisateur (5,7) du bateau.

7. Procédé de guidage d'un bateau selon l'une quelconque des revendications 4 à 6, **caractérisé en ce qu'**il comporte en outre les étapes suivantes :
- réception par le bateau (1) et au moins un autre navire (11) du même plan de route à partir de points de départ différents émis par le serveur distant (12),
- départ de chaque point de départ du bateau (1) et de l'au moins un autre navire (11) pour naviguer selon le plan de route transmis,
- émission par l'au moins un autre navire (11) de sa position à destination du serveur distant (12),
- émission par le serveur distant (12) de la position de l'au moins un autre navire et affichage sur l'interface utilisateur (5,7) de la position du bateau et de l'autre au moins un autre navire.

8. Procédé de guidage d'un bateau selon la revendication 7, **caractérisé en ce qu'**il comporte en outre une étape de calcul par le serveur distant (12) des classements du bateau (1) et de l'au moins un autre navire (11) en fonction de leurs positions respectives sur le plan de route, et une étape d'affichage sur l'interface utilisateur (5,7) d'une indication sur le classement du bateau et de l'au moins un autre navire.

9. Procédé de guidage d'un bateau selon l'une quelconque des revendications 4 à 7, **caractérisé en ce qu'**il comporte en outre une étape d'introduction d'une commande pour signaler la présence d'un objet flottant à proximité du bateau (1), ladite étape d'introduction déclenchant une étape d'émission par radio vers le serveur distant (12) d'un message associant la présence d'un objet flottant à la position du bateau au moment de l'introduction de la commande.

10. Procédé de guidage d'un bateau selon l'une quelconque des revendications 4 à 9, **caractérisé en ce que** l'au moins une étiquette émettant un code identifiant l'objet, le procédé comportant une étape de comparaison des identifiants reçus avec une liste d'identifiants afin de répertorier et d'afficher sur un écran (5,7) les objets présents et absents à bord.

11. Procédé de guidage d'un bateau selon la revendication 10, **caractérisé en ce que** l'étiquette électronique est apposée sur un réservoir d'eau et transmet une information représentative du niveau d'eau à l'intérieur, le procédé comportant une étape de comparaison du niveau d'eau actuel avec un niveau d'eau minimal, ladite étape déclenchant si le niveau est en-dessous du niveau minimal une étape de détermination d'un nouveau plan de route permettant au bateau d'arriver à une réserve d'eau et une étape d'affichage de ce nouveau plan de route.

12. Procédé de guidage d'un bateau selon la revendication 10, **caractérisé en ce que** l'étiquette électronique est apposée sur un réservoir de carburant et transmet une information représentative du niveau de carburant à l'intérieur, le procédé comportant une étape de comparaison du niveau de carburant actuel avec un niveau de carburant minimal, ladite étape déclenchant si le niveau est en-dessous du niveau minimal une étape de détermination d'un nouveau plan de route permettant au bateau d'arriver à une réserve de carburant et une étape d'affichage de ce nouveau plan de route.

13. Procédé de guidage d'un bateau selon la revendication 10, **caractérisé en ce que** l'étiquette électronique est apposée sur un équipement dont la défaillance est détectable par ladite étiquette, le procédé comportant une étape de détection (6.1) de la défaillance dudit équipement déclenchant les étapes suivantes :
- émission (6.2) par l'unité centrale (3) vers un serveur au sol (12) de la référence de l'équipement défaillant,
- recherche (6.3) par le serveur (12) d'un port où un équipement en ordre de marche est disponible, le port étant sélectionné selon sa proximité avec le point d'arrivée du bateau,
- émission par le serveur vers le bateau (1) d'un nouveau plan de route permettant au bateau d'arriver au port sélectionné,
- affichage sur un écran (5, 7) du nouveau plan de route.

14. Procédé de guidage d'un bateau selon la revendication 13, **caractérisé en ce qu'**il comporte une étape d'introduction d'une commande pour réserver l'équipement présent au port déclenchant une étape d'émission vers le serveur (12) d'un signal de réservation dudit équipement.

15. Procédé de guidage d'un bateau selon l'une quelconque des revendications 4 à 14, **caractérisé en ce que** le bateau comporte un détecteur de choc destiné à détecter des chocs contre la coque, ledit procédé comportant l'émission vers le serveur au sol (12) d'un signal lorsqu'un choc est détecté et l'affichage sur un écran du serveur de la présence dudit choc.

## Patentansprüche

1. Leitsystem für mindestens ein Schiff (1), das Folgendes umfasst:
- das Schiff umfasst mindestens eine Ausrüstung mit einem zeitvariablen Parameter;
- mindestens einen entfernten Server (12),
das Schiff (1) umfasst eine Zentraleinheit (3), die mit einer Benutzerschnittstelle (5, 6) und mit einem Funkmittel zur bidirektionalen Kommunikation mit dem entfernten Server verbunden ist, **dadurch gekennzeichnet, dass** es mindestens ein elektronisches Etikett umfasst, das an mindestens einer Ausrüstung des Schiffes angebracht ist, die einen mit der Zeit variierenden Parameter hat, wobei das elektronische Etikett einen elektronischen Chip umfasst, der einen mehrfach überschreibbaren Speicher enthält,
und dass die Zentraleinheit auch mit einem Mittel zum Empfangen von Daten verbunden ist, die von mindestens einem elektronischen Etikett gesendet werden, wobei die von den Etiketten gesendeten Daten die Etiketten den Wert des Parameters umfassen, der sich mit der Zeit ändert, die Zentraleinheit so konfiguriert ist, dass sie Informationen aus den von den Etiketten gesendeten Daten, die aktuelle Position und den Kursplan des Schiffs (1) per Funk an den Server (12) sendet und von diesem Server Daten zur Änderung des Kursplans empfängt, die auf der Benutzerschnittstelle angezeigt werden.

2. Leitsystem für ein Schiff umfassend ein Schiff (1) und einen entfernten Server (12) nach Anspruch 1, **dadurch gekennzeichnet, dass** das Funkmittel zur bidirektionalen Kommunikation dazu ausgelegt ist, die Position von mindestens einem anderen Schiff (11) zu empfangen, das nach demselben Kursplan fährt und zur selben Zeit von einem anderen Startpunkt aus gestartet ist, wobei die Benutzerschnittstelle (5, 7) die Position des Schiffes und des mindestens einen anderen Schiffes anzeigt.

3. Leitsystem für ein Schiff umfassend ein Schiff (1) und einen entfernten Server (12), nach Anspruch 1 oder 2, **dadurch gekennzeichnet, dass** das Mittel (8) zum Empfangen von mindestens einem Etikett einen Code empfängt, der das Objekt identifiziert, wobei die Zentraleinheit (3) die empfangenen Identifikatoren mit einer Liste von Identifikatoren im Speicher vergleicht, um die an Bord vorhandenen und abwesenden Objekte aufzulisten und auf einer Benutzerschnittstelle (5, 7) anzuzeigen.

4. Verfahren zum Leiten mindestens eines Schiffes (1), das Folgendes umfasst:
- mindestens eine Ausrüstung mit einem mit der Zeit variierenden Parameter;
- eine Zentraleinheit (3), die mit einer Benutzerschnittstelle (5, 6, 7) verbunden ist;
- Funkmittel zur bidirektionalen Kommunikation mit einem entfernten Server;
**dadurch gekennzeichnet, dass** mindestens ein elektronisches Etikett an mindestens einer Ausrüstung des Schiffes angebracht ist, die einen mit der Zeit variierenden Parameter aufweist, wobei das elektronische Etikett einen elektronischen Chip mit einem mehrfach überschreibbaren Speicher umfasst, wobei die Zentraleinheit (3) mit einem Mittel zum Empfangen von durch das mindestens eine elektronische Etikett gesendeten Daten verbunden ist, wobei die von den Etiketten gesendeten Daten den Wert des mit der Zeit variierenden Parameters umfassen,
und dadurch, dass es folgende Schritte umfasst:
- Senden von Informationen von der Zentraleinheit (3) an einen entfernten Server, die aus den von den Datenetiketten gesendeten Daten stammen, des Zustands des Schiffes (1), der Position des Schiffes und des Kursplans des Schiffes,
- Senden von Änderungsdaten des Routenplans durch diesen Server, die auf der Benutzerschnittstelle (5, 7) angezeigt werden.

5. Verfahren zum Leiten eines Schiffes nach Anspruch 4, **dadurch gekennzeichnet, dass** es zusätzlich folgende Schritte umfasst:
- Berechnung durch den entfernten Server (2.4) des Kurses des mindestens einen anderen Schiffes in Abhängigkeit von der Zeit, die durch den übertragenen Kursplan bestimmt wird,
- Vergleich (2.5) durch den entfernten Server (12) des Kurses des Schiffes (1), der durch seinen Kursplan bestimmt wird, und des Kurses von mindestens einem anderen Schiff,
- Ermittlung (2.6) der Abstände zwischen den Positionen des Schiffes und mindestens eines Schiffes in regelmäßigen Zeitabständen entsprechend ihren jeweiligen Kursen und Erkennen einer Kollisionsgefahr, wenn dieser Abstand zu einem gegebenen Zeitpunkt unter einem bestimmten Wert liegt,
- Übertragung durch den entfernten Server und Anzeige auf der Benutzerschnittstelle (5, 6, 7) eines Kollisionsrisikos mit Angabe des Ortes, an dem die Kollision stattfinden wird.

6. Verfahren zum Leiten eines Schiffes nach Anspruch 4 bis 5, **dadurch gekennzeichnet, dass** es ferner folgende Schritte umfasst:
- Ermittlung eines verfügbaren Platzes durch den Server des Hafens, der das Anlegen des Schiffes (1) in diesem Hafen ermöglicht,
- Änderung des Hafens des übertragenen Routenplans durch den Server (12), um den verfügbaren Ort zu erreichen,
- Übertragung des geänderten Routenplans vom Server (12) an die Zentraleinheit (3) zur Anzeige auf der Benutzeroberfläche (5, 7) des Schiffes.

7. Verfahren zum Leiten eines Schiffes nach einem der Ansprüche 4 bis 6, **dadurch gekennzeichnet, dass** es zusätzlich folgende Schritte umfasst:
- Empfang durch das Schiff (1) und mindestens ein anderes Schiff (11) des gleichen Routenplans von verschiedenen Startpunkten aus, der von dem entfernten Server (12) gesendet wird,
- Abfahrt von jedem Abfahrtsort des Schiffes (1) und des mindestens einen anderen Schiffes (11), um gemäß dem übertragenen Routenplan zu navigieren,
- Senden von mindestens einem anderen Schiff (11) seiner Position an den entfernten Server (12),
- Senden der Position des mindestens einen anderen Schiffs durch den entfernten Server (12) und Anzeigen der Position des Schiffes und des mindestens einen anderen Schiffes auf der Benutzeroberfläche (5, 7).

8. Verfahren zum Leiten eines Schiffes nach Anspruch 7, **dadurch gekennzeichnet, dass** es ferner einen Schritt umfasst, bei dem der entfernte Server (12) die Klassifizierungen des Schiffes (1) und des mindestens einen anderen Schiffes (11) in Abhängigkeit von ihren jeweiligen Positionen auf dem Routenplan berechnet, und einen Schritt, bei dem auf der Benutzerschnittstelle (5, 7) eine Angabe über die Klassifizierung des Schiffes und des mindestens einen anderen Schiffes angezeigt wird.

9. Verfahren zum Leiten eines Schiffes nach einem der Ansprüche 4 bis 7, **dadurch gekennzeichnet, dass** es ferner einen Schritt zum Eingeben eines Befehls umfasst, um das Vorhandensein eines schwimmenden Objekts in der Nähe des Schiffes (1) zu signalisieren, wobei der Schritt zum Eingeben einen Schritt zum Senden einer Nachricht, die das Vorhandensein eines schwimmenden Objekts mit der Position des Schiffes zum Zeitpunkt des Eingebens des Befehls verbindet, per Funk an den entfernten Server (12) auslöst.

10. Verfahren zum Leiten eines Schiffes nach einem der Ansprüche 4 bis 9, **dadurch gekennzeichnet, dass** mindestens ein Etikett einen Code aussendet, der das Objekt identifiziert, wobei das Verfahren einen Schritt des Vergleichens der empfangenen Identifikatoren mit einer Liste von Identifikatoren umfasst, um die an Bord vorhandenen und abwesenden Objekte aufzulisten und auf einem Bildschirm (5, 7) anzuzeigen.

11. Verfahren zum Leiten eines Schiffes nach Anspruch 10, **dadurch gekennzeichnet, dass** das elektronische Etikett an einem Wassertank angebracht ist und eine Information überträgt, die für den Wasserstand im Inneren repräsentativ ist, wobei das Verfahren einen Schritt des Vergleichs des aktuellen Wasserstands mit einem Mindestwasserstand umfasst, wobei dieser Schritt, wenn der Wasserstand unter dem Mindestwasserstand liegt, einen Schritt der Bestimmung eines neuen Routenplans, der es dem Schiff ermöglicht, in eine Wasserreserve zu gelangen, und einen Schritt der Anzeige dieses neuen Routenplans auslöst.

12. Verfahren zum Leiten eines Schiffes nach Anspruch 10, **dadurch gekennzeichnet, dass** das elektronische Etikett an einem Kraftstofftank angebracht ist und eine Information überträgt, die für den Kraftstoffstand im Inneren repräsentativ ist, wobei das Verfahren einen Schritt des Vergleichens des aktuellen Kraftstoffstandes mit einem Mindestkraftstoffstand umfasst, wobei dieser Schritt, wenn der Stand unter dem Mindeststand liegt, einen Schritt der Bestimmung eines neuen Routenplans, der es dem Schiff ermöglicht, zu einer Kraftstoffreserve zu gelangen, und einen Schritt der Anzeige dieses neuen Routenplans auslöst.

13. Verfahren zum Leiten eines Schiffes nach Anspruch 10, **dadurch gekennzeichnet, dass** das elektronische Etikett an einer Ausrüstung angebracht wird, deren Ausfall durch das Etikett erkannt werden kann, wobei das Verfahren einen Schritt zum Erkennen (6.1) des Ausfalls der Ausrüstung umfasst, der folgende Schritte auslöst:
- Senden (6.2) der Referenz der ausgefallenen Ausrüstung durch die Zentraleinheit (3) an einen Server am Boden (12),
- Suchen (6.3) durch den Server (12) nach einem Hafen oder einer funktionierenden Ausrüstung, wobei der Hafen entsprechend seiner Nähe zum Ankunftsort des Schiffes ausgewählt wird,
- Senden eines neuen Routenplans vom Server an das Schiff (1), der es dem Schiff ermöglicht, den ausgewählten Hafen zu erreichen,
- Anzeigen des neuen Routenplans auf einem Bildschirm (5, 7) .

14. Verfahren zum Leiten eines Schiffes nach Anspruch 13, **dadurch gekennzeichnet, dass** es einen Schritt zum Eingeben eines Befehls zum Reservieren der im Hafen vorhandenen Ausrüstung umfasst, der einen Schritt zum Senden eines Reservierungssignals für die Ausrüstung an den Server (12) auslöst.

15. Verfahren zum Leiten eines Schiffes nach einem der Ansprüche 4 bis 14, **dadurch gekennzeichnet, dass** das Schiff einen Stoßsensor zum Erfassen von Stößen gegen den Rumpf aufweist, wobei das Verfahren das Senden eines Signals an den Server am Boden (12) umfasst, wenn ein Stoß erfasst wird, und das Anzeigen des Vorhandenseins des Stoßes auf einem Bildschirm des Servers.

## Claims

1. A system for guiding at least one boat (1) comprising:
- said boat comprising at least one piece of equipment having a parameter varying over time;
- at least one remote server (12),
said boat (1) including a central unit (3) connected to a user interface (5, 6), and to a radio means for bidirectional communication with the remote server, **characterised in that** it comprises at least one electronic tag affixed on the at least one piece of equipment of the boat that has a parameter varying over time, the electronic tag comprising an electronic chip including a repeatedly rewritable memory,
and **in that** the central unit is also connected to a means for receiving data emitted by the at least one electronic tag, the data emitted by the tags including the value of the parameter varying over time, said central unit is configured to transmit by radio to the server (12) information derived from the data emitted by the tags, the current position and the route plan of the boat (1), and to receive from this server route plan modification data which are displayed on the user interface.

2. The system for guiding a boat comprising a boat (1) and a remote server (12) according to claim 1, **characterised in that** the bidirectional communication radio device is designed to receive the position of at least one other ship (11) which navigates according to the same route plan, and has departed at the same time departing from a different departing point, the user interface (5, 7) displaying the position of the boat and of the at least one other ship.

3. The system for guiding a boat comprising a boat (1) and a remote server (12) according to claim 1 or 2, **characterised in that** said receiver means (8) receiving from the at least one tag a code identifying the item, the central unit (3) comparing the received identifiers with a list of identifiers in memory in order to list and display on a user interface (5, 7) the items present and absent on-board.

4. A method for guiding at least one boat (1) including:
- at least one piece of equipment having a parameter varying over time;
- a central unit (3) connected to a user interface (5, 6, 7) ;
- radio means for bidirectional communication with a remote server;
**characterised in that** at least one electronic tag is affixed on the at least one piece of equipment of the boat that has a parameter varying over time, the electronic tag comprising an electronic chip including a repeatedly rewritable memory, the central unit (3) being connected to a means for receiving data emitted by the at least one electronic tag, the data emitted by the tags including the value of the parameter varying over time,
and **in that** it includes the following steps:
- emitting by said central unit (3) to a remote server information derived from the data emitted by the status data tags of the boat (1), the position of the boat and the route plan of the boat,
- emitting by this server route plan modification data which are displayed on the user interface (5, 7).

5. The method for guiding a boat according to claim 4, **characterised in that** it further includes the following steps:
- computing (2.4) by the remote server the trajectory of the at least one other ship over time, defined by the transmitted route plan,
- comparing (2.5) by the remote server (12) the trajectory of the boat (1) defined by its route plan and the at least one trajectory of the at least one other ship,
- determining (2.6) the distances separating the positions of the boat and the at least one other ship at regular time intervals according to their respective trajectories and detecting a collision risk if said distance is below a given value at a given time point,
- transmitting by the remote server and displaying on the user interface (5, 6, 7) a collision risk by indicating the location where this collision will happen.

6. The method for guiding a boat according to claim 4 to 5, **characterised in that** it further includes the following steps:
- determining by the server of the port an available spot allowing mooring said boat (1) in this port,
- modifying by the server (12) of the port the transmitted route plan to reach the available spot, and
- emitting by the server (12) to the central unit (3) the modified route plan to be displayed on the user interface (5, 7) of the boat.

7. The method for guiding a boat according to any one of claims 4 to 6, **characterised in that** it further includes the following steps:
- receiving by the boat (1) and at least one other ship (11) of the same route plan departing from different departing points emitted by the remote server (12),
- departing from each departing point of the boat (1) and of the at least one other ship (11) to navigate according to the transmitted route plan,
- emitting by the at least one other ship (11) its position to the remote server (12),
- emitting by the remote server (12) the position of the at least one other ship and displaying on the user interface (5, 7) the position of the boat and of the at least one other ship.

8. The method for guiding a boat according to claim 7, **characterised in that** it further includes a step of computing by the remote server (12) rankings of the boat (1) and of the at least one other ship (11) according to their respective positions on the route plan, and a step of displaying on the user interface (5, 7) an indication on the ranking of the boat and of the at least one other ship.

9. The method for guiding a boat according to any one of claims 4 to 7, **characterised in that** it further includes a step of entering a command to signal the presence of a floating object proximate to the boat (1), said entry step triggering a step of emitting by radio to the remote server (12) a message associating the presence of a floating object at the position of the boat at the time of entry of the command.

10. The method for guiding a boat according to any one of claims 4 to 9, **characterised in that** the at least one tag emitting a code identifying the object, the method including a step of comparing the received identifiers with a list of identifiers in order to list and display on a screen (5, 7) the items present and absent on-board.

11. The method for guiding a boat according to claim 10, **characterised in that** the electronic tag is affixed on a water tank and transmits information representative of the water level inside, the method including a step of comparing the current water level with a minimum water level, said step triggering, if the level is below the minimum level, a step of determining a new route plan enabling the boat to arrive at a water reserve and a step of displaying this new route plan.

12. The method for guiding a boat according to claim 10, **characterised in that** the electronic tag is affixed on a fuel tank and transmits information representative of a fuel level inside, the method including a step of comparing the current fuel level with a minimum fuel level, said step triggering, if the level is below the minimum level, a step of determining a new route plan enabling the boat to arrive at a fuel reserve and a step of displaying this new route plan.

13. The method for guiding a boat according to claim 10, **characterised in that** the electronic tag is affixed on a piece of equipment a failure of which is detectable by said tag, the method including a step (6.1) of detecting the failure of said piece of equipment triggering the following steps:
- emitting (6.2) by the central unit (3) to a server on the ground (12) the reference of the defective equipment,
- searching (6.3) by the server (12) for a port where a piece of equipment in working order is available, the port being selected according to its proximity with an arrival point of the boat,
- emitting by the server to the boat (1) a new route plan enabling the boat to arrive at the selected port,
- displaying the new route plan on a screen (5, 7).

14. The method for guiding a boat according to claim 13, **characterised in that** it includes a step of entering a command to book the equipment present at the port triggering a step of emitting to the server (12) a signal for booking said equipment.

15. The method for guiding a boat according to any one of claims 4 to 14, **characterised in that** the boat includes an impact detector configured to detect impacts against a hull, said method including emitting to the server on the ground (12) a signal when an impact is detected and displaying the presence of said impact on a screen of the server.
